(19) **Europäisches Patentamt**
**European Patent Office**
**Office européen des brevets**

(11) **EP 4 567 624 A1**

(12) **EUROPEAN PATENT APPLICATION**
published in accordance with Art. 153(4) EPC

(43) Date of publication:
**11.06.2025 Bulletin 2025/24**

(51) International Patent Classification (IPC):
**G06F 16/2455** (2019.01)

(21) Application number: **24784291.7**

(22) Date of filing: **02.04.2024**

(86) International application number:
**PCT/CN2024/085570**

(87) International publication number:
**WO 2024/208208 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023 CN 202310347782**

(71) Applicant: **Beijing Volcano Engine Technology
Co., Ltd.
Beijing 100190 (CN)**

(72) Inventors:
• **ZHANG, Daode**
  **Beijing 100028 (CN)**
• **CAI, Quanwei**
  **Beijing 100028 (CN)**
• **WANG, Yafei**
  **Beijing 100028 (CN)**
• **ZHANG, Lin**
  **Beijing 100028 (CN)**
• **LIN, Yu**
  **Beijing 100028 (CN)**
• **WU, Ye**
  **Beijing 100028 (CN)**

(74) Representative: **Isarpatent
- Patent- und Rechtsanwälte Partg mbB
Friedrichstraße 31
80801 München (DE)**

(54) **DATA QUERY METHOD AND APPARATUS, DEVICE AND MEDIUM**

(57)      Provided in the present disclosure are a data query method and apparatus, a device and a medium. The method comprises: acquiring a first keyword to be queried; on the basis of an oblivious pseudorandom function, encrypting the first keyword to obtain a first oblivious pseudorandom function value corresponding to the first keyword; determining a first hash value of the first keyword on the basis of the first oblivious pseudorandom function value and a hash function, and determining a first key of the first keyword on the basis of a key derivation function; and, on the basis of the first hash value, the first key and a symmetric encryption algorithm, decrypting a ciphertext data packet provided by a server to obtain a query result corresponding to a data query operation. The present disclosure helps to improve the efficiency of data query.

Fig.1

**Description**

The present application claims priority to Chinese Patent Application No. 202310347782.5 filed on April 3, 2023, which is hereby incorporated by reference in its entirety as a part of the present application.

TECHNICAL FIELD

The present disclosure relates to a method and apparatus of data querying, an electronic device, and a storage medium.

BACKGROUND

Private Information Retrieval (PIR) refers to obtaining content corresponding to a query condition from a server without exposing the query condition on a client. In the related art, it is usually implemented by using a fully homomorphic encryption algorithm. However, the fully homomorphic encryption algorithm has a complex operation process, for example, homomorphic encryption, homomorphic multiplication, and other operations need to be performed, resulting in low efficiency of data query based on fully homomorphic encryption.

SUMMARY

A method and an apparatus of data querying, an electronic device, and a storage medium are at least provided in embodiments of the present disclosure, which can improve the efficiency of data query.
An embodiment of the present disclosure provides a method of data querying. The method includes:

acquiring a first keyword to be queried in response to a data query operation;
performing encryption processing on the first keyword based on an oblivious pseudo-random function to obtain a first oblivious pseudo-random function value corresponding to the first keyword;
determining a first hash value corresponding to the first keyword based on the first oblivious pseudo-random function value and a preset hash function, and determining a first key corresponding to the first keyword based on a key derivation function, where the first hash value and the first key corresponding to the same first keyword have a corresponding relationship therebetween; and
decrypting a ciphertext data package provided by a server, based on the first hash value, the first key, and a symmetric encryption algorithm to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client.

In the embodiment of the present disclosure, the first keyword to be queried on the client is encrypted by the oblivious pseudo-random function, the first hash value is generated based on the hash function, and the first key corresponding to the first keyword is determined by the key derivation function. Moreover, the ciphertext data package returned by the server is also encrypted based on the above functions. In this way the client can decrypt the ciphertext data package returned by the server. Compared with the solution of implementing private information retrieval based on a complex homomorphic encryption algorithm in the related art, the private information retrieval can be implemented through the above functions, which can improve the efficiency of data query. In addition, the client encrypts the first keyword through the oblivious pseudo-random function, so that the server cannot obtain any query information, thus improving the security of the query.
In a possible implementation, the ciphertext data package includes a plurality of ciphertext data pairs, each ciphertext data pair of the plurality of ciphertext data pairs includes a second hash value and ciphertext data corresponding to the second hash value, and the second hash value is obtained by processing the data in the database based on the oblivious pseudo-random function and the hash function. The decrypting a ciphertext data package provided by a server based on the first hash value, the first key, and a symmetric encryption algorithm to obtain a query result corresponding to the data query operation includes:

for each ciphertext data pair, when the second hash value in the ciphertext data pair is identical to the first hash value, decrypting ciphertext data corresponding to the second hash value based on the symmetric encryption algorithm and the first key corresponding to the first hash value to obtain plaintext data; and
obtaining the query result corresponding to the data query operation by using the plaintext data as a query result of the first keyword corresponding to the first hash value.

In the embodiment of the present disclosure, for each ciphertext data pair, if the second hash value in the ciphertext data pair is the same as the first hash value, it means that the client has the first key to decrypt the ciphertext data pair to obtain the plaintext data, which can improve the pertinence and accuracy of decryption.

In a possible implementation, the first oblivious pseudo-random function value is in a string format. The determining a first hash value corresponding to the first keyword based on the first oblivious pseudo-random function value and the preset hash function includes:

according to a preset first splitting character length, splitting the first oblivious pseudo-random function value in the string format corresponding to the first keyword into a first sub-function value and a second sub-function value; and

determining a sub-hash value corresponding to one of the first sub-function value and the second sub-function value based on the preset hash function, and determining the sub-hash value as the first hash value corresponding to the first keyword.

The determining a first key corresponding to the first keyword based on a key derivation function includes: determining a sub-key corresponding to the other of the first sub-function value and the second sub-function value based on the key derivation function, and determining the sub-key as the first key corresponding to the first keyword.

In the embodiment of the present disclosure, the first hash value and the first key are determined by splitting the first oblivious pseudo-random function value into the first sub-function value and the second sub-function value, which can improve the diversity of determination manners.

In a possible implementation, the determining a first key corresponding to the first keyword based on a key derivation function includes:

determining the first key corresponding to the first keyword based on the key derivation function and the first oblivious pseudo-random function value corresponding to the first keyword; or

determining the first key corresponding to the first keyword based on the key derivation function and the first hash value corresponding to the first keyword.

In the embodiment of the present disclosure, the first key may be determined based on the first oblivious pseudo-random function value or the first hash value, which can improve the diversity of determination manners of the first key.

In a possible implementation, the first hash value is in a string format. The determining the first key corresponding to the first keyword based on the key derivation function and the first hash value corresponding to the first keyword includes:

according to a preset second splitting character length, splitting the first hash value in the string format corresponding to the first keyword into a first sub-hash value and a second sub-hash value; and

determining one of the first sub-hash value and the second sub-hash value as the first hash value, and determining the first key based on the key derivation function and the other of the first sub-hash value and the second sub-hash value.

In the embodiment of the present disclosure, the first hash value may be split, and then the first hash value and the first key are re-determined according to the sub-hash value obtained by splitting, which can improve the diversity of determination manners of the first hash value and the first key.

In a possible implementation, the method further includes:
determining the query result of the first keyword corresponding to the first hash value as a null value when the first hash value is different from each of second hash values.

In the embodiment of the present disclosure, if the first hash value is different from each second hash value, it means that the client does not have the corresponding first key to decrypt the ciphertext data corresponding to the second hash value. In this case, the query result of the first keyword corresponding to the first hash value may be assigned a null value, thus improving the integrity of the query result.

An embodiment of the present disclosure further provides a method of data querying. The method includes:

acquiring a second key corresponding to an oblivious pseudo-random function, and performing encryption processing on data in a database based on the second key, where each piece of data in the database is stored in a form of a key-value pair, each key-value pair includes a second keyword and a key value corresponding to the second keyword, and the performing encryption processing on data in a database based on the second key includes encrypting the second keyword in each key-value pair to obtain a second oblivious pseudo-random function value corresponding to each second keyword;

for each second keyword, determining a second hash value corresponding to the second keyword based on the second oblivious pseudo-random function value and a preset hash function, and determining a third key corresponding to the second keyword based on a key derivation function;

encrypting the key value corresponding to the second keyword based on a symmetric encryption algorithm and the third key corresponding to the second keyword to obtain ciphertext data corresponding to each second keyword, where the ciphertext data and the second hash value which are both corresponding to the second keyword have a second corresponding relationship therebetween; and

generating a ciphertext data pair based on the second hash value corresponding to the second keyword and the ciphertext data corresponding to the second keyword, generating a ciphertext data package based on the ciphertext data pair, and sending the ciphertext data package to a client, so that the client decrypts the ciphertext data package based on the hash function, the oblivious pseudo-random function, the key derivation function, and the symmetric encryption algorithm which are pre-negotiated with a server.

In the embodiment of the present disclosure, each key-value pair is encrypted based on the oblivious pseudo-random function, the hash function, the key derivation function, and the symmetric encryption algorithm, which can reduce the overhead of data processing and improve the efficiency of encryption compared with the homomorphic encryption algorithm in the related art. In addition, the server encrypts the data in the database by adopting the above encryption manner, so that the data returned by the server can only be decrypted by the first hash value and the first key on the client, and the data that cannot be decrypted will not be leaked, thus improving the security of the data.

An embodiment of the present disclosure provides an apparatus of data querying. The apparatus includes:

an acquisition module, configured to acquire a first keyword to be queried in response to a data query operation;

an encryption module, configured to perform encryption processing on the first keyword based on an oblivious pseudo-random function to obtain a first oblivious pseudo-random function value corresponding to the first keyword;

a determination module, configured to determine a first hash value corresponding to the first keyword based on the first oblivious pseudo-random function value and a preset hash function, and determine a first key corresponding to the first keyword based on a key derivation function, where the first hash value and the first key corresponding to the same first keyword have a corresponding relationship therebetween; and

a decryption module, configured to decrypt a ciphertext data package provided by a server based on the first hash value, the first key, and a symmetric encryption algorithm to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client.

In a possible implementation, the ciphertext data package includes a plurality of ciphertext data pairs, each ciphertext data pair of the plurality of ciphertext data pairs includes a second hash value and ciphertext data corresponding to the second hash value, and the second hash value is obtained by processing the data in the database based on the oblivious pseudo-random function and the hash function. The decryption module is further configured to:

for each ciphertext data pair, when the second hash value in the ciphertext data pair is identical to the first hash value, decrypt ciphertext data corresponding to the second hash value based on the symmetric encryption algorithm and the first key corresponding to the first hash value to obtain plaintext data; and

obtain the query result corresponding to the data query operation by using the plaintext data as a query result of the first keyword corresponding to the first hash value.

In a possible implementation, the first oblivious pseudo-random function value is in a string format. The determination module is further configured to:

according to a preset first splitting character length, split the first oblivious pseudo-random function value in the string format corresponding to the first keyword into a first sub-function value and a second sub-function value; and

determine a sub-hash value corresponding to one of the first sub-function value and the second sub-function value based on the preset hash function, and determining the sub-hash value as the first hash value corresponding to the first keyword.

The determination module is further configured to:
determine a sub-key corresponding to the other of the first sub-function value and the second sub-function value based on the key derivation function, and determining the sub-key as the first key corresponding to the first keyword.

In a possible implementation, the determination module is further configured to:

determine the first key corresponding to the first keyword based on the key derivation function and the first oblivious pseudo-random function value corresponding to the first keyword; or

determine the first key corresponding to the first keyword based on the key derivation function and the first hash value corresponding to the first keyword.

In a possible implementation, the first hash value is in a string format. The determination module is further configured to:

according to a preset second splitting character length, split the first hash value in the string format corresponding to the first keyword into a first sub-hash value and a second sub-hash value; and

determine one of the first sub-hash value and the second sub-hash value as the first hash value, and determine the first key based on the key derivation function and the other of the first sub-hash value and the second sub-hash value.

In a possible implementation, the determination module is further configured to:
determine the query result of the first keyword corresponding to the first hash value as a null value when the first hash value is different from each of second hash values.

An embodiment of the present disclosure provides an apparatus of data querying. The apparatus includes:

a keyword encryption module, configured to acquire a second key corresponding to an oblivious pseudo-random function, and perform encryption processing on data in a database based on the second key, where each piece of data in the database is stored in a form of a key-value pair, each key-value pair includes a second keyword and a key value corresponding to the second keyword, and the performing encryption processing on the data in the database based on the second key includes encrypting the second keyword in each key-value pair to obtain a second oblivious pseudo-random function value corresponding to each second keyword;
a key determination module, configured to for each second keyword, determine a second hash value corresponding to the second keyword based on the second oblivious pseudo-random function value and a preset hash function, and determine a third key corresponding to the second keyword based on a key derivation function;
a key value encryption module, configured to encrypt the key value corresponding to the second keyword based on a symmetric encryption algorithm and the third key corresponding to the second keyword to obtain ciphertext data corresponding to the second keyword, where the ciphertext data and the second hash value corresponding to the same second keyword have a second corresponding relationship therebetween; and
a ciphertext generation module, configured to generate a ciphertext data pair based on the second hash value corresponding to the second keyword and the ciphertext data corresponding to the second keyword, generate a ciphertext data package based on the ciphertext data pair correspondingly, and send the ciphertext data package to a client, so that the client decrypts the ciphertext data package based on the hash function, the oblivious pseudo-random function, the key derivation function, and the symmetric encryption algorithm which are pre-negotiated with a server.

An embodiment of the present disclosure further provides an electronic device. The electronic device includes a processor, a memory, and a bus. The memory stores machine-readable instructions executable by the processor. When the electronic device is running, the processor communicates with the memory through the bus. The machine-readable instructions, when executed by the processor, cause the steps of the method of data querying in any one of the above possible implementations to be executed.

An embodiment of the present disclosure further provides a computer-readable storage medium. The computer-readable storage medium has a computer program stored thereon, and the computer program, when executed by a processor, causes the steps of the method of data querying in any one of the above possible implementations to be executed.

In order to make the above objects, features, and advantages of the present disclosure more apparent, optional embodiments are described in detail below with reference to the drawings.

BRIEF DESCRIPTION OF DRAWINGS

In order to illustrate the technical solutions of the embodiments of the present disclosure more clearly, the drawings required for illustrating the embodiments are briefly described below. The drawings are incorporated in and constitute a part of this specification, and illustrate embodiments consistent with the present disclosure, and are used together with the specification to illustrate the technical solutions of the present disclosure. It should be understood that the following drawings only illustrate some embodiments of the present disclosure, and therefore should not be considered as limiting the scope, and those of ordinary skill in the art can obtain other related drawings according to these drawings without paying creative efforts.

Fig. 1 shows a flowchart of a method of data querying provided by some embodiments of the present disclosure;
Fig. 2 shows a flowchart of a method for decrypting a ciphertext data package provided by some embodiments of the present disclosure;
Fig. 3 shows a flowchart of a method of data querying provided by other embodiments of the present disclosure;
Fig. 4 shows a schematic diagram of an apparatus of data querying provided by some embodiments of the present disclosure;
Fig. 5 shows a schematic diagram of an apparatus of data querying provided by other embodiments of the present disclosure; and
Fig. 6 shows a schematic diagram of an electronic device provided by an embodiment of the present disclosure.

DETAILED DESCRIPTION

In order to make the objectives, technical solutions, and advantages of the embodiments of the present disclosure clearer, the technical solutions in the embodiments of the present disclosure will be clearly and completely described below with reference to the drawings in the embodiments of the present disclosure. Obviously, the described embodiments are only a part of the embodiments of the present disclosure, rather than all of them. The components of the embodiments of the present disclosure generally described and shown in the drawings may be arranged and designed in various different configurations. Therefore, the following detailed description of the embodiments of the present disclosure provided in the drawings is not intended to limit the scope of the claimed present disclosure, but only represents selected embodiments of the present disclosure. Based on the embodiments of the present disclosure, all other embodiments obtained by those of ordinary skill in the art without creative efforts shall fall within the protection scope of the present disclosure.

It should be noted that similar reference numerals and letters represent similar items in the following drawings, and therefore, once an item is defined in one drawing, there is no need to further define and explain it in the following drawings.

The term "and/or" in this text only describes an association relationship and represents that there may be three relationships, for example, A and/or B may represent the following three cases: A exists alone, A and B exist at the same time, and B exists alone. In addition, the term "at least one" in this text represents any one of multiple or any combination of at least two of multiple, for example, including at least one of A, B, and C may represent including any one or more elements selected from a set consisting of A, B, and C.

When performing data query, the client usually obtains data corresponding to the query condition from the server based on some query conditions (such as keywords, etc.). If the client directly submits the query condition to the server, the query condition will be completely exposed to the server, or if the server directly returns the query result to the client, the query result will also be completely leaked to the client.

It is found through research that in order to solve the above pain points of data query, the fully homomorphic encryption algorithm is usually used to perform private information retrieval in the related art. However, the operation process of the fully homomorphic encryption algorithm is complex, and operations such as homomorphic encryption and homomorphic multiplication need to be performed, which requires a large amount of data processing time, resulting in low efficiency of data query.

Based on the above research, the present disclosure provides a method and an apparatus of data querying, a device, and a storage medium. Firstly, a first keyword to be queried is acquired in response to a data query operation; secondly, encryption processing is performed on the first keyword based on an oblivious pseudo-random function to obtain a first oblivious pseudo-random function value corresponding to the first keyword; then, a first hash value corresponding to the first keyword is determined based on the first oblivious pseudo-random function value and a preset hash function, and a first key corresponding to the first keyword is determined based on a key derivation function, where the first hash value and the first key which are both corresponding to the first keyword have a corresponding relationship therebetween; finally, a ciphertext data package provided by a server is decrypted based on the first hash value, the first key, and a symmetric encryption algorithm to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client. Thus, the client can decrypt the ciphertext data package returned by the server. Compared with the solution of implementing private information retrieval based on a complex homomorphic encryption algorithm in the related art, the private information retrieval can be implemented through the above functions, which can improve the efficiency of data query. In addition, the client encrypts the first keyword through the oblivious pseudo-random function, so that the server cannot obtain any query information, thus improving the security of the query.

In order to facilitate understanding of the embodiment, an execution body of the method of data querying provided by the embodiments of the present disclosure is first introduced in detail. The execution body of the method of data querying provided by the embodiments of the present disclosure is an electronic device. In this implementation, the electronic device may be a terminal device. The terminal device may be a mobile device, a user terminal, a handheld device, a computing device, a wearable device, and the like. In addition, the method of data querying may also be implemented by a processor calling a computer readable instruction stored in a memory.

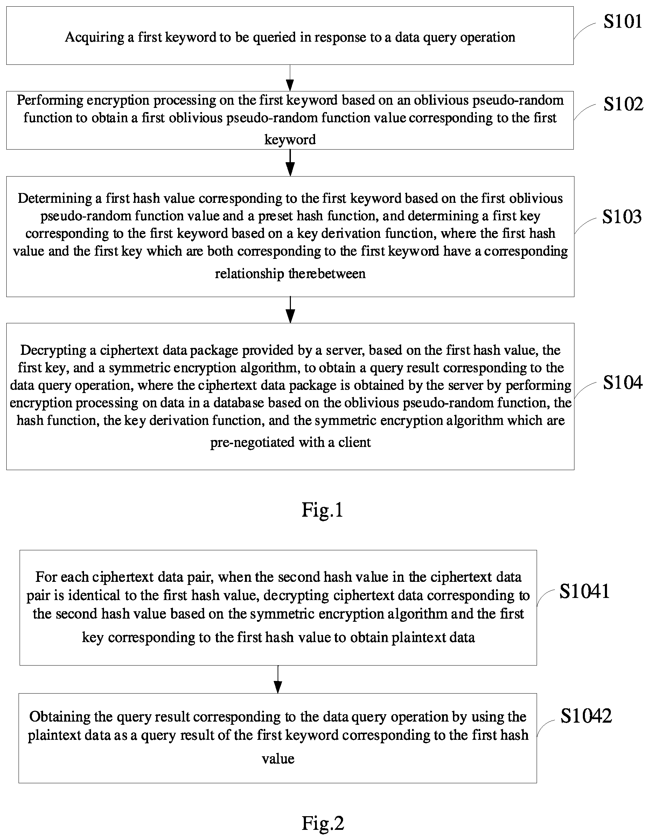

The method of data querying provided by the embodiments of the present disclosure is described in detail below with reference to the drawings. Referring to Fig. 1, it is a flowchart of a method of data querying provided by an embodiment of the present disclosure. The method includes steps S101 to S104, where:

S101, acquiring a first keyword to be queried in response to a data query operation.

Exemplarily, the user may input a query condition (that is, the first keyword to be queried) in a preset data query interface and perform a data query operation (such as triggering a query button, etc.), so that the client can acquire the first keyword to be queried in response to the data query operation. The number of the first keywords may be one or more, which is not limited here.

It should be noted that the format of the first keyword is not limited, and may be a number, a letter, a text, etc., which is not limited here.

In the embodiment of the present disclosure, the data in the database on the server side is in a form of a key-value pair, therefore, when querying, the user may input the corresponding first keyword (that is, the key value), so that the server returns data (that is, the value value) corresponding to the first keyword.

S102, performing encryption processing on the first keyword based on an oblivious pseudo-random function to obtain a first oblivious pseudo-random function value corresponding to the first keyword.

An oblivious pseudo-random function (OPRF) is a two-party protocol pre-agreed between the client and the server. The client and the server obtain OPRF outputs through interaction through the protocol. For a specific function expression, please refer to formula (1):

$$f\left(k_{oprf}, x\right) = \left(\ *\ ,\ f_{k_{oprf}}\left(x\right)\right) \tag{1}$$

The key of the oblivious pseudo-random function f is $k_{oprf}$, and the input is $x$; the input of the server is $k_{oprf}$, and the output is a null value (*); the input of the client is $x$, and the output is $f_{k_{oprf}}(x)$. After the client and the server run the OPRF protocol, the server cannot obtain any information about the input $x$ of the client. Similarly, the client cannot obtain any information about $k_{oprf}$.

For the client, the first keyword may be encrypted based on the oblivious pseudo-random function to obtain the OPRF output, that is, the OPRF output is the OPRF value of the input value (that is, the first keyword). The OPRF function may be implemented based on the following formula (2):

$$OPRF\left(k_{oprf},\ x_i\right)\ \in \{0,\ 1\}^k \tag{2}$$

$k_{oprf}$ is the key of the oblivious pseudo-random function, and $x_i$ is the first keyword, that is, the first keyword may be encrypted into a string with a character length of k that only contains 0 and 1 through the OPRF function.

It should be noted that although there is $k_{oprf}$ in formula (2), the client cannot obtain the key, and this formula indicates that it is used to describe the OPRF output of the client.

In addition, an anti-collision hash function HF, a key derivation function KDF, and a symmetric encryption algorithm SE are also pre-agreed between the client and the server. Specific applications of the above functions will be described in subsequent steps.

S103, determining a first hash value corresponding to the first keyword based on the first oblivious pseudo-random function value and a preset hash function, and determining a first key corresponding to the first keyword based on a key derivation function, where the first hash value and the first key which are both corresponding to the first keyword have a corresponding relationship therebetween.

A hash function (Hash Function, HF), also known as a hash function, is a method for creating a small digital "fingerprint" from any kind of data, which can compress a string into a string with a preset length, thus, querying based on the compressed string can improve the efficiency of data query. Commonly used hash functions include SHA2, SHA3, SM3, and the like. The hash function may be implemented based on the following formula (3):

$$w_{x_i} = HF\left(OPRF\left(k_{oprf},\ x_i\right)\right) \in \{0,\ 1\}^{\lambda_1} \tag{3}$$

$\lambda_1$ is the preset character length, that is, the first oblivious pseudo-random function value may be compressed into a string with a character length of $\lambda_1$ through the hash function.

The key derivation function (Key Derivation Function, KDF) may derive one or more keys based on the oblivious pseudo-random function, and a commonly used key derivation function includes HKDF. The key derivation function may be implemented based on the following formula (4):

$$k_{x_i} = KDF(OPRF(k_{oprf}, \ x_i)) \in \{0, \ 1\}^{\lambda_2} \qquad (4)$$

$\lambda_2$ is the preset character length, that is, the first key with a character length of $\lambda_2$ may be generated through the key derivation function.

It can be seen from formula (3) and formula (4) that when determining the first hash value corresponding to the first keyword based on the preset hash function, the first hash value corresponding to the first keyword may be determined based on the preset hash function and the OPRF value corresponding to the first keyword; when determining the first key corresponding to the first keyword based on the key derivation function, the first key corresponding to the first keyword may be determined based on the preset key derivation function and the OPRF value corresponding to the first keyword.

S104, decrypting a ciphertext data package provided by a server based on the first hash value, the first key, and a symmetric encryption algorithm to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client.

Here, the ciphertext data package provided by the server may be sent to the client by the server, or may be sent to the client by the server in response to a data acquisition request sent by the client to the server, which is not limited here. In this way, the client can decrypt the ciphertext data package according to the first hash value and the first key determined in the preceding steps, so as to obtain the key value corresponding to the first keyword.

In the embodiment of the present disclosure, the first keyword to be queried on the client is encrypted by the oblivious pseudo-random function, the first hash value is generated based on the hash function, and the first key corresponding to the first keyword is determined by the key derivation function, and the ciphertext data package returned by the server is also encrypted based on the above functions, so that the client can decrypt the ciphertext data package returned by the server. Compared with the solution of implementing private information retrieval based on a complex homomorphic encryption algorithm in the related art, the private information retrieval can be implemented through the above functions, which can improve the efficiency of data query. In addition, the client encrypts the first keyword through the oblivious pseudo-random function, so that the server cannot obtain any query information, thus improving the security of the query.

Optionally, since the first oblivious pseudo-random function value is in a string format, when determining the first hash value corresponding to the first keyword based on the preset hash function, the first oblivious pseudo-random function value in the string format corresponding to the first keyword may be split into a first sub-function value and a second sub-function value according to a preset first splitting character length; the sub-hash value corresponding to one of the first sub-function value and the second sub-function value may be determined based on the preset hash function, and the sub-hash value is determined as the first hash value corresponding to the first keyword. When determining the first key corresponding to the first keyword based on the key derivation function, the sub-key corresponding to the other of the first sub-function value and the second sub-function value may be determined based on the key derivation function, and the sub-key is determined as the first key corresponding to the first keyword.

The preset first splitting character length may be half of the character length of the first oblivious pseudo-random function value. For example, if the character length of the first oblivious pseudo-random function value is 256, the first 128 characters may be used as the first sub-function value, and the last 128 characters may be used as the second sub-function value, or the last 128 characters may be used as the first sub-function value, and the first 128 characters may be used as the second sub-function value. The first sub-function value is determined as the first hash value, and at the same time, the sub-key corresponding to the second sub-function value is determined based on the key derivation function, and the sub-key is determined as the first key corresponding to the first keyword.

In some implementations, for step S104, when determining the first key corresponding to the first keyword based on the key derivation function, the following two ways may be included:

The first way is: determining the first key corresponding to the first keyword based on the key derivation function and the first oblivious pseudo-random function value corresponding to the first keyword. For a specific determination way, please refer to the embodiment corresponding to formula (4), which will not be repeated here.

The second way is: determining the first key corresponding to the first keyword based on the key derivation function and the first hash value corresponding to the first keyword. It can be understood that since the first hash value is also in a string format, and the first hash value is obtained by compressing the first oblivious pseudo-random function value, and thus the corresponding first key may be determined based on the first hash value.

Optionally, when determining the first key corresponding to the first keyword based on the key derivation function and the first hash value corresponding to the first keyword, the method includes: splitting the first hash value in the string format corresponding to the first keyword into a first sub-hash value and a second sub-hash value according to a preset second splitting character length; determining one of the first sub-hash value and the second sub-hash value as the first hash value; and determining the first key based on the key derivation function and the other of the first sub-hash value and the second sub-hash value.

Exemplarily, if the character length of the first hash value is 128 characters, the 128 characters may be split into the first sub-hash value with 64 characters and the second sub-hash value with 64 characters, and then one of the first sub-hash value and the second sub-hash value may be determined as the first hash value, and the first key may be determined based on the key derivation function and the other of the first sub-hash value and the second sub-hash value.

It is mentioned in the preceding embodiments that the server sends the ciphertext data package to the client, which may be sent when receiving the data acquisition request sent by the client, or may be sent actively by the server, which is not limited here.

The following describes step S104, when decrypting the ciphertext data package provided by the server based on the first hash value, the first key, and the symmetric encryption algorithm to obtain the query result corresponding to the data query operation, referring to Fig. 2, the method includes steps S1041 to S1042:

S1041, for each ciphertext data pair, when the second hash value in the ciphertext data pair is identical to the first hash value, decrypting ciphertext data corresponding to the second hash value based on the symmetric encryption algorithm and the first key corresponding to the first hash value to obtain plaintext data.

It can be understood that for each ciphertext data pair, if the second hash value in the ciphertext data pair is the same as the first hash value, that is, there is $w_{x_i}$ to make $w_{x_i}=w_{y_j}$, since the hash function is anti-collision, that is, if $w_{x_i}=w_{y_j}$, it means that there is $x_i$ to make $x_i = y_j$, which means that the client currently has the first key $k_{x_i}$ that can decrypt the ciphertext data corresponding to the second hash value. For a specific decryption process, please refer to formula (8) and formula (9):

$$k_{x_i} = KDF\left(OPRF\left(k_{oprf}, x_i\right)\right) = KDF\left(OPRF\left(k_{oprf}, y_j\right)\right) = k_{y_j} \quad (8)$$

$$l_{x_i} = SE.Dec\left(k_{x_i},\ c_{y_j}\right) = SE.Dec\left(k_{y_j}, c_{y_j}\right) = l_{y_j} \quad (9)$$

Thus, the ciphertext data $k_{xi}$ returned by the server may be decrypted based on the first key $c_{y_j}$ to obtain the plaintext data corresponding to the ciphertext data $c_{y_j}$.

In some implementations, for each ciphertext data pair, if the second hash value in the ciphertext data pair is different from the first hash value, it means that the client does not have the corresponding first key $k_{x_i}$ to decrypt the ciphertext data, and the query result of the first keyword corresponding to the first hash value is determined as a null value.

S1042, obtaining the query result corresponding to the data query operation by using a plaintext data as the query result of the first keyword corresponding to the first hash value.

It can be understood that after obtaining the plaintext data, the plaintext data may be used as the query result of the first keyword corresponding to the first hash value, that is, the data (value value) corresponding to the first keyword may be determined, and then the query result corresponding to the data query operation may be obtained.

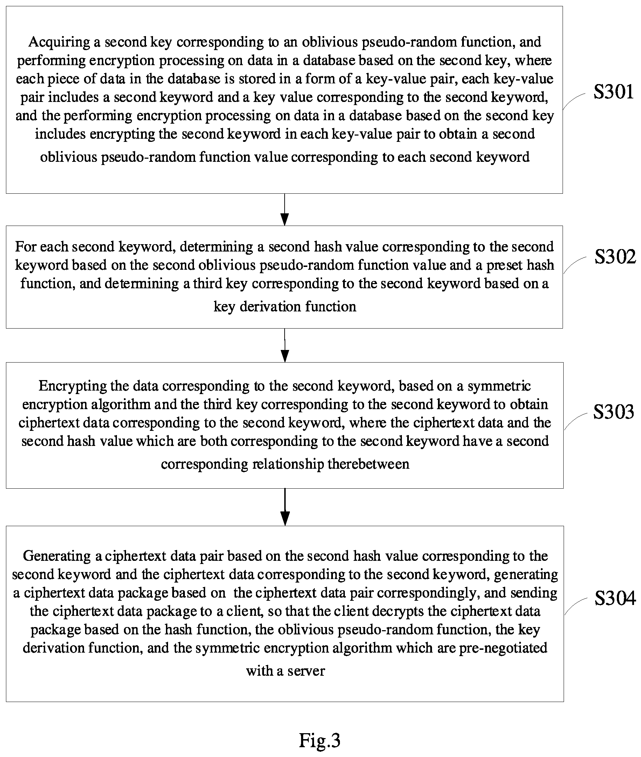

The data encryption process of the server is introduced in detail below with reference to Fig. 3.

Referring to Fig. 3, it is a flowchart of another method of data querying provided by an embodiment of the present disclosure. In this embodiment, the execution body of the method of data querying is a server, and the server may be an independent physical server, or a server cluster or a distributed system composed of multiple physical servers, or a cloud server that provides basic cloud computing services such as cloud services, cloud databases, cloud computing, cloud storage, big data, and artificial intelligence platforms.

As shown in Fig. 3, the method of data querying includes steps S301 to S304:

S301, acquiring a second key corresponding to an oblivious pseudo-random function, and performing encryption processing on data in a database based on the second key, where each piece of data in the database is stored in a form of a key-value pair, each key-value pair includes a second keyword and a key value corresponding to the second keyword, and the performing encryption processing on data in a database based on the second key includes encrypting the second keyword in each key-value pair to obtain a second oblivious pseudo-random function value corresponding to each second keyword.

Here, when the server and the client run the OPRF protocol at the same time, the server can acquire the key of the oblivious pseudo-random function (that is, the second key), and then perform encryption processing on the plaintext data package based on the second key. It should be noted that the second key is the key $k_{oprf}$ of the oblivious pseudo-random function f involved in the preceding embodiments.

The data in the database is plaintext data, and the plaintext data is in a form of a key-value pair.

S302, for each second keyword determining a second hash value corresponding to the second keyword based on the second oblivious pseudo-random function value and a preset hash function, and determining a third key corresponding to the second keyword based on a key derivation function.

Exemplarily, the mathematical expression of each key-value pair may be $(y_i, l_{y_i})$, and the second oblivious pseudo-random function value corresponding to the second keyword in the key-value pair may be determined based on the preset oblivious pseudo-random function, the second hash value $w_{y_j}$ corresponding to the second keyword may be determined based on the hash function, and the third key $k_{y_j}$ corresponding to the second keyword may be determined based on the key derivation function. For specific formula, please refer to formula (5) to formula (7):

$$OPRF\ (k_{oprf},\ y_j)\ \in \{0,\ 1\}^k \tag{5}$$

$$w_{y_j} = HF\left(OPRF(k_{oprf},\ y_j)\right) \in \{0,\ 1\}^{\lambda_1} \tag{6}$$

$$k_{y_j} = KDF(OPRF(k_{oprf},\ y_j)) \in \{0,\ 1\}^{\lambda_2} \tag{7}$$

Since the respective encryption functions (the oblivious pseudo-random function, the hash function, the key derivation function, and the symmetric encryption algorithm) used by the server and the client are the same, please refer to the preceding embodiments for the specific encryption process, which will not be repeated here.

In some implementations, when determining the second hash value corresponding to the second keyword based on the preset hash function and determining the third key corresponding to the second keyword based on the key derivation function, the second hash value and the third key may also be determined according to the character splitting manner described in the preceding embodiments, and for a specific splitting process, please refer to the preceding embodiments, which will not be repeated here.

S303, encrypting the data corresponding to the second keyword based on the symmetric encryption algorithm and the third key corresponding to the second keyword to obtain the ciphertext data corresponding to the second keyword, where the ciphertext data and the second hash value which are both corresponding to the second keyword have a second corresponding relationship therebetween.

The symmetric encryption algorithm (Symmetric Encryption, SE) consists of three algorithms: key generation, encryption, and decryption. The key generation algorithm outputs a key k according to a specific distribution; when the key k and the plaintext m are input, the encryption algorithm outputs the ciphertext c of the plaintext, which is briefly recorded as c = *SE. Enc(k, m);* when the key k and the ciphertext c are input, the decryption algorithm SE.Dec outputs the plaintext m' corresponding to the ciphertext c, which is briefly recorded as m' = *SE. Dec(k, c).* Commonly used symmetric encryption algorithms include AES, Chacha20, SM4, and the like.

For the specific symmetric encryption formula, please refer to formula (8):

$$c_{y_j} = SE.Enc\ (k_{y_j},\ l_{y_j}) \tag{8}$$

$k_{y_j}$ is the third key determined for each second keyword based on the key derivation function, $l_{y_j}$ is the data corresponding to each second keyword, and $c_{y_j}$ is the ciphertext data corresponding to each second keyword.

It should be noted that the server only encrypts the data through the symmetric encryption algorithm, and the decryption process is performed on the client.

In this implementation, the symmetric encryption algorithm supports encrypting data with any length, so the data corresponding to the second keyword with a long character length may also be encrypted, thus reducing the limitation of encryption.

S304, generating a ciphertext data pair based on the second hash value corresponding to the second keyword and the ciphertext data corresponding to the second keyword, generating a ciphertext data package based on the ciphertext data pair correspondingly, and sending the ciphertext data package to the client, so that the client decrypts the ciphertext data package based on the hash function, the oblivious pseudo-random function, the key derivation function, and the symmetric encryption algorithm which are pre-negotiated with the server.

It can be understood that after the ciphertext data corresponding to each second keyword is generated, the ciphertext data pair $(k_{y_j},\ c_{y_j})$ may be generated based on the respective second hash value and the corresponding ciphertext data, so as to generate the ciphertext data package, and send the ciphertext data package to the client. In this way, the client can decrypt the ciphertext data package based on the first hash value, the first key, and the symmetric encryption algorithm, and then the plaintext data matching the first keyword may be determined from the decrypted data.

Those skilled in the art can understand that in the above method of the specific implementation, the writing sequence of each step does not mean a strict execution sequence and constitutes any limitation on the implementation process, and the specific execution sequence of each step should be determined by its function and possible internal logic.

Based on the same inventive concept, the embodiment of the present disclosure further provides an apparatus of data querying corresponding to the method of data querying. Since the principle of solving the problem by the apparatus in the embodiment of the present disclosure is similar to the method of data querying in the above embodiment of the present disclosure, the implementation of the apparatus can refer to the implementation of the method, and the repetition will not be repeated.

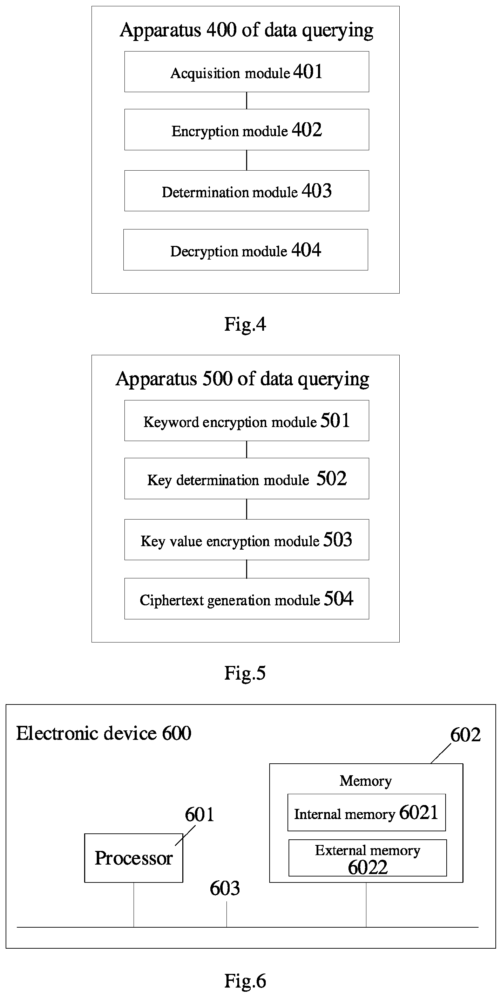

Referring to Fig. 4, it is a schematic diagram of an apparatus 400 of data querying provided by an embodiment of the present disclosure. The apparatus includes:

an acquisition module 401, configured to acquire a first keyword to be queried in response to a data query operation;
an encryption module 402, configured to perform encryption processing on the first keyword based on an oblivious pseudo-random function to obtain a first oblivious pseudo-random function value corresponding to the first keyword;
a determination module 403, configured to determine a first hash value corresponding to the first keyword based on the first oblivious pseudo-random function value and a preset hash function, and determine a first key corresponding to the first keyword based on a key derivation function, where the first hash value and the first key which are corresponding to the first keyword have s a corresponding relationship therebetween; and
a decryption module 404, configured to decrypt a ciphertext data package provided by a server based on the first hash value, the first key, and a symmetric encryption algorithm to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client.

In a possible implementation, the ciphertext data package includes a plurality of ciphertext data pairs, each ciphertext pair of the ciphertext data pairs includes a second hash value and ciphertext data corresponding to the second hash value, and the second hash value is obtained by processing the data in the database based on the oblivious pseudo-random function and the hash function. The decryption module 404 is further configured to:

when the second hash value in the ciphertext data pair is identical to the first hash value, decrypt ciphertext data corresponding to the second hash value based on the symmetric encryption algorithm and the first key corresponding to the first hash value to obtain plaintext data; and
obtain the query result corresponding to the data query operation by using the plaintext data as the query result of the first keyword corresponding to the first hash value.

In a possible implementation, the first oblivious pseudo-random function value is in a string format. The determination module 403 is further configured to:

according to a preset first splitting character length, split the first oblivious pseudo-random function value in the string format corresponding to the first keyword into a first sub-function value and a second sub-function value; and
determine a sub-hash value corresponding to one of the first sub-function value and the second sub-function value based on the preset hash function, and determine the sub-hash value as the first hash value corresponding to the first keyword.

The determination module 403 is further configured to:
determine a sub-key corresponding to the other of the first sub-function value and the second sub-function value based on the key derivation function, and determine the sub-key as the first key corresponding to the first keyword.

In a possible implementation, the determination module 403 is further configured to:

determine the first key corresponding to the first keyword based on the key derivation function and the first oblivious pseudo-random function value corresponding to the first keyword; or
determine the first key corresponding to the first keyword based on the key derivation function and the first hash value corresponding to the first keyword.

In a possible implementation, the first hash value is in a string format. The determination module 403 is further configured to:

according to a preset second splitting character length, split the first hash value in the string format corresponding to the first keyword into a first sub-hash value and a second sub-hash value; and

determine one of the first sub-hash value and the second sub-hash value as the first hash value, and determine the first key based on the key derivation function and the other of the first sub-hash value and the second sub-hash value.

In a possible implementation, the determination module 403 is further configured to:
determine the query result of the first keyword corresponding to the first hash value as a null value when the first hash value is different from each of the second hash values.

Referring to Fig. 5, it is a schematic diagram of an apparatus 500 of data querying provided by some other embodiments of the present disclosure. The apparatus includes:

a keyword encryption module 501, configured to acquire a second key corresponding to an oblivious pseudo-random function, and perform encryption processing on data in a database based on the second key, where each piece of data in the database is stored in a form of a key-value pair, each key-value pair includes a second keyword and a key value corresponding to the second keyword, and the performing encryption processing on data in a database based on the second key includes encrypting the second keyword in each key-value pair to obtain a second oblivious pseudo-random function value corresponding to each second keyword;

a key determination module 502, configured to for each second keyword, determine a second hash value corresponding to the second keyword based on the second oblivious pseudo-random function value and a preset hash function, and determine a third key corresponding to the second keyword based on a key derivation function;

a key value encryption module 503, configured to encrypt the key value corresponding to the second keyword based on a symmetric encryption algorithm and the third key corresponding to the second keyword to obtain ciphertext data corresponding to the second keyword, where the ciphertext data and the second hash value which are corresponding to the second keyword have a second corresponding relationship therebetween; and

a ciphertext generation module 504, configured to generate a ciphertext data pair based on the second hash value corresponding to the second keyword and the ciphertext data corresponding to the second keyword, generate a ciphertext data package based on the ciphertext data pair correspondingly, and send the ciphertext data package to a client, so that the client decrypts the ciphertext data package based on the hash function, the oblivious pseudo-random function, the key derivation function, and the symmetric encryption algorithm which are pre-negotiated with a server.

For the description of the processing flow of each module in the apparatus and the interaction flow between each module, reference may be made to the related description in the preceding method embodiments, and details are not repeated here.

Based on the same technical concept, an embodiment of the present disclosure further provides an electronic device. Referring to Fig. 6, it is a schematic structural diagram of an electronic device 600 provided by an embodiment of the present disclosure, including a processor 601, a memory 602, and a bus 603. The memory 602 is configured to store execution instructions, including an internal memory 6021 and an external memory 6022; the internal memory 6021 here is also referred to as an internal storage, which is used to temporarily store operation data in the processor 601 and data exchanged with the external memory 6022 such as a hard disk, and the processor 601 exchanges data with the external memory 6022 through the internal memory 6021.

In the embodiment of the present disclosure, the memory 602 is further configured to store application program codes for executing the solution of the present disclosure, and the application program codes are controlled by the processor 601 to be executed. That is, when the electronic device 600 is running, the processor 601 communicates with the memory 602 through the bus 603, so that the processor 601 executes the application program codes stored in the memory 602, and then executes the method described in any one of the preceding embodiments.

The memory 602 may be, but is not limited to, a random access memory (Random Access Memory, RAM), a read-only memory (Read Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electrically Erasable Programmable Read-Only Memory, EEPROM), etc.

The processor 601 may be an integrated circuit chip with signal processing capabilities. The above processor may be a general-purpose processor, including a central processing unit (Central Processing Unit, CPU), a network processor (Network Processor, NP), etc.; it may also be a digital signal processor (DSP), an application specific integrated circuit (ASIC), a field programmable gate array (FPGA) or other programmable logic devices, discrete gate or transistor logic devices, discrete hardware components. Various methods, steps and logic block diagrams disclosed in the embodiments of the present invention may be implemented or executed. The general-purpose processor may be a microprocessor or the processor may also be any conventional processor, etc.

It can be understood that the structure illustrated in the embodiment of the present disclosure does not constitute a specific limitation on the electronic device 600. In other embodiments of the present disclosure, the electronic device 600 may include more or fewer components than those shown in the figure, or combine some components, or split some components, or arrange different components. The illustrated components may be implemented in hardware, software or a combination of software and hardware.

An embodiment of the present disclosure further provides a computer-readable storage medium. The computer-readable storage medium has a computer program stored thereon, and the computer program, when executed by a processor, causes the steps of data querying in the preceding method embodiments to be executed. The storage medium may be a volatile or non-volatile computer-readable storage medium.

An embodiment of the present disclosure further provides a computer program product. The computer program product carries program codes, and instructions included in the program codes may be used to execute the steps of data querying in the preceding method embodiments, which may be specifically referred to the preceding method embodiments, and details are not repeated here.

The above computer program product may be specifically implemented by hardware, software, or a combination thereof. In an optional embodiment, the computer program product is embodied as a computer storage medium, and in another optional embodiment, the computer program product is embodied as a software product, such as a software development kit (Software Development Kit, SDK), etc.

Those skilled in the art can clearly understand that for the convenience and conciseness of description, the specific working process of the above-described system and apparatus may refer to the corresponding process in the preceding method embodiments, which will not be repeated here. In the several embodiments provided in the present disclosure, it should be understood that the disclosed system, apparatus, and method may be implemented in other manners. The above-described apparatus embodiments are only schematic, for example, the division of the units is only a logical function division, and there may be other division manners in actual implementation, for another example, multiple units or components may be combined or integrated into another system, or some features may be ignored, or not executed. In another point, the mutual coupling or direct coupling or communication connection shown or discussed may be through some communication interfaces, and the indirect coupling or communication connection of the apparatus or unit may be electrical, mechanical, or other forms.

The units described as separate parts may or may not be physically separated, and the parts displayed as units may or may not be physical units, that is, they may be located in one place or distributed to multiple network units. Some or all of the units may be selected according to actual needs to achieve the objective of the solution of the embodiment.

In addition, in various embodiments of the present disclosure, the respective functional units may be integrated into one processing unit, or the respective units may exist alone physically, or two or more units may be integrated into one unit.

If the functions are implemented in the form of software functional units and sold or used as independent products, they may be stored in a non-volatile computer-readable storage medium executable by a processor. Based on such understanding, the technical solutions of the present disclosure, or the part thereof that contributes to the known technology, or the part thereof may be embodied in the form of software products. The computer software products are stored in a storage medium, including several instructions for enabling an electronic device (which may be a personal computer, a server, or a network device, etc.) to perform all or part of the steps of the methods described in the respective embodiments of the present disclosure. The preceding storage medium includes various media that can store program codes, such as a USB flash drive, a mobile hard disk, a read-only memory, a random access memory, a magnetic disk, or an optical disk.

Finally, it should be noted that the above embodiments are only specific implementations of the present disclosure, which are used to illustrate the technical solutions of the present disclosure, but not to limit them, and the protection scope of the present disclosure is not limited thereto. Although the present disclosure has been described in detail with reference to the preceding embodiments, those of ordinary skill in the art should understand that any person skilled in the art can still modify the technical solutions described in the preceding embodiments or can easily think of changes within the technical scope disclosed in the present disclosure, or equivalently replace some of the technical features; and these modifications, changes, or replacements do not make the essence of the corresponding technical solutions deviate from the spirit and scope of the technical solutions of the embodiments of the present disclosure, and should be covered by the protection scope of the present disclosure. Therefore, the protection scope of the present disclosure should be subject to the protection scope of the claims.

**Claims**

1. A method of data querying, comprising:

   acquiring a first keyword to be queried in response to a data query operation;
   performing encryption processing on the first keyword based on an oblivious pseudo-random function to obtain a first oblivious pseudo-random function value corresponding to the first keyword;
   determining a first hash value corresponding to the first keyword based on the first oblivious pseudo-random function value and a preset hash function, and determining a first key corresponding to the first keyword based on a key derivation function, wherein the first hash value and the first key which are both corresponding to the first keyword have a corresponding relationship therebetween; and
   decrypting a ciphertext data package provided by a server, based on the first hash value, the first key, and a symmetric encryption algorithm, to obtain a query result corresponding to the data query operation, wherein the ciphertext data package is obtained by the server by performing encryption processing on data in a database based on the oblivious pseudo-random function, the hash function, the key derivation function, and the symmetric encryption algorithm which are pre-negotiated with a client.

2. The method according to claim 1, wherein the ciphertext data package comprises a plurality of ciphertext data pairs, each ciphertext data pair of the plurality of ciphertext data pairs comprises a second hash value and ciphertext data corresponding to the second hash value, and the second hash value is obtained by processing the data in the database based on the oblivious pseudo-random function and the hash function; and the decrypting a ciphertext data package provided by a server based on the first hash value, the first key, and a symmetric encryption algorithm to obtain a query result corresponding to the data query operation comprises:

   for each ciphertext data pair, when the second hash value in the ciphertext data pair is identical to the first hash value, decrypting ciphertext data corresponding to the second hash value based on the symmetric encryption algorithm and the first key corresponding to the first hash value to obtain plaintext data; and
   obtaining the query result corresponding to the data query operation by using the plaintext data as a query result of the first keyword corresponding to the first hash value.

3. The method according to claim 1 or 2, wherein the first oblivious pseudo-random function value is in a string format; and the determining a first hash value corresponding to the first keyword based on the first oblivious pseudo-random function value and the preset hash function comprises:

   according to a preset first splitting character length, splitting the first oblivious pseudo-random function value in the string format corresponding to the first keyword into a first sub-function value and a second sub-function value; and
   determining a sub-hash value corresponding to one of the first sub-function value and the second sub-function value based on the preset hash function, and determining the sub-hash value as the first hash value corresponding to the first keyword; and
   the determining a first key corresponding to the first keyword based on a key derivation function comprises:
   determining a sub-key corresponding to the other of the first sub-function value and the second sub-function value based on the key derivation function, and determining the sub-key as the first key corresponding to the first keyword.

4. The method according to any one of claims 1 to 3, wherein the determining a first key corresponding to the first keyword based on a key derivation function comprises:

   determining the first key corresponding to the first keyword based on the key derivation function and the first oblivious pseudo-random function value corresponding to the first keyword; or
   determining the first key corresponding to the first keyword based on the key derivation function and the first hash value corresponding to the first keyword.

5. The method according to claim 4, wherein the first hash value is in a string format; and the determining the first key corresponding to the first keyword based on the key derivation function and the first hash value corresponding to the first keyword comprises:

   according to a preset second splitting character length, splitting the first hash value in the string format corresponding to the first keyword into a first sub-hash value and a second sub-hash value; and
determining one of the first sub-hash value and the second sub-hash value as the first hash value, and determining the first key based on the key derivation function and the other of the first sub-hash value and the second sub-hash value.

6. The method according to claim 2, wherein the method further comprises:
determining the query result of the first keyword corresponding to the first hash value as a null value when the first hash value is different from each of second hash values.

7. A method of data querying, comprising:

acquiring a second key corresponding to an oblivious pseudo-random function, and performing encryption processing on data in a database based on the second key, wherein each piece of data in the database is stored in a form of a key-value pair, each key-value pair comprises a second keyword and a key value corresponding to the second keyword, and the performing encryption processing on data in a database based on the second key comprises encrypting the second keyword in each key-value pair to obtain a second oblivious pseudo-random function value corresponding to each second keyword;
for each second keyword, determining a second hash value corresponding to the second keyword based on the second oblivious pseudo-random function value and a preset hash function, and determining a third key corresponding to the second keyword based on a key derivation function;
encrypting the key value corresponding to the second keyword, based on a symmetric encryption algorithm and the third key corresponding to the second keyword to obtain ciphertext data corresponding to the second keyword, wherein the ciphertext data and the second hash value which are both corresponding to the second keyword have a second corresponding relationship therebetween; and
generating a ciphertext data pair based on the second hash value corresponding to the second keyword and the ciphertext data corresponding to the second keyword, generating a ciphertext data package based on the ciphertext data pair correspondingly, and sending the ciphertext data package to a client, so that the client decrypts the ciphertext data package based on the hash function, the oblivious pseudo-random function, the key derivation function, and the symmetric encryption algorithm which are pre-negotiated with a server.

8. An apparatus of data querying, comprising:

an acquisition module, configured to acquire a first keyword to be queried in response to a data query operation;
an encryption module, configured to perform encryption processing on the first keyword based on an oblivious pseudo-random function to obtain a first oblivious pseudo-random function value corresponding to the first keyword;
a determination module, configured to determine a first hash value corresponding to the first keyword based on the first oblivious pseudo-random function value and a preset hash function, and determine a first key corresponding to the first keyword based on a key derivation function, wherein the first hash value and the first key which are both corresponding to first keyword have a corresponding relationship therebetween; and
a decryption module, configured to decrypt a ciphertext data package provided by a server based on the first hash value, the first key, and a symmetric encryption algorithm to obtain a query result corresponding to the data query operation, wherein the ciphertext data package is obtained by the server by performing encryption processing on data in a database based on the oblivious pseudo-random function, the hash function, the key derivation function, and the symmetric encryption algorithm which are pre-negotiated with a client.

9. An apparatus of data querying, comprising:

a keyword encryption module, configured to acquire a second key corresponding to an oblivious pseudo-random function, and perform encryption processing on data in a database based on the second key, wherein each piece of data in the database is stored in a form of a key-value pair, each key-value pair comprises a second keyword and a key value corresponding to the second keyword, and the performing encryption processing on data in a database based on the second key comprises encrypting the second keyword in each key-value pair to obtain a second oblivious pseudo-random function value corresponding to each second keyword;
a key determination module, configured to for each second keyword, determine a second hash value corresponding to the second keyword based on the second oblivious pseudo-random function value and a preset hash function, and determine a third key corresponding to the second keyword based on a key derivation function;
a key value encryption module, configured to encrypt the key value corresponding to the second keyword based on a symmetric encryption algorithm and the third key corresponding to the second keyword to obtain ciphertext data corresponding to the second keyword, wherein the ciphertext data and the second hash value corresponding to the second keyword have a second corresponding relationship therebetween; and

a ciphertext generation module, configured to generate a ciphertext data pair based on the second hash value corresponding to the second keyword and the ciphertext data corresponding to the second keyword, generate a ciphertext data package based on the ciphertext data pair correspondingly, and send the ciphertext data package to a client, so that the client decrypts the ciphertext data package based on the hash function, the oblivious pseudo-random function, the key derivation function, and the symmetric encryption algorithm which are pre-negotiated with a server.

10. An electronic device, comprising: a processor, a memory, and a bus, wherein the memory stores machine-readable requests being capable of being executed by the processor; when the electronic device is running, the processor communicates with the memory through the bus; and the machine-readable requests, when executed by the processor, cause steps of the method of data querying according to any one of claims 1 to 7 to be executed.

11. A computer-readable storage medium, wherein the computer-readable storage medium has a computer program stored thereon, and the computer program, when executed by a processor, causes steps of the method of data querying according to any one of claims 1 to 7 to be executed.

Acquiring a first keyword to be queried in response to a data query operation — S101

Performing encryption processing on the first keyword based on an oblivious pseudo-random function to obtain a first oblivious pseudo-random function value corresponding to the first keyword — S102

Determining a first hash value corresponding to the first keyword based on the first oblivious pseudo-random function value and a preset hash function, and determining a first key corresponding to the first keyword based on a key derivation function, where the first hash value and the first key which are both corresponding to the first keyword have a corresponding relationship therebetween — S103

Decrypting a ciphertext data package provided by a server, based on the first hash value, the first key, and a symmetric encryption algorithm, to obtain a query result corresponding to the data query operation, where the ciphertext data package is obtained by the server by performing encryption processing on data in a database based on the oblivious pseudo-random function, the hash function, the key derivation function, and the symmetric encryption algorithm which are pre-negotiated with a client — S104

Fig.1

For each ciphertext data pair, when the second hash value in the ciphertext data pair is identical to the first hash value, decrypting ciphertext data corresponding to the second hash value based on the symmetric encryption algorithm and the first key corresponding to the first hash value to obtain plaintext data — S1041

Obtaining the query result corresponding to the data query operation by using the plaintext data as a query result of the first keyword corresponding to the first hash value — S1042

Fig.2

Acquiring a second key corresponding to an oblivious pseudo-random function, and performing encryption processing on data in a database based on the second key, where each piece of data in the database is stored in a form of a key-value pair, each key-value pair includes a second keyword and a key value corresponding to the second keyword, and the performing encryption processing on data in a database based on the second key includes encrypting the second keyword in each key-value pair to obtain a second oblivious pseudo-random function value corresponding to each second keyword    S301

For each second keyword, determining a second hash value corresponding to the second keyword based on the second oblivious pseudo-random function value and a preset hash function, and determining a third key corresponding to the second keyword based on a key derivation function    S302

Encrypting the data corresponding to the second keyword, based on a symmetric encryption algorithm and the third key corresponding to the second keyword to obtain ciphertext data corresponding to the second keyword, where the ciphertext data and the second hash value which are both corresponding to the second keyword have a second corresponding relationship therebetween    S303

Generating a ciphertext data pair based on the second hash value corresponding to the second keyword and the ciphertext data corresponding to the second keyword, generating a ciphertext data package based on the ciphertext data pair correspondingly, and sending the ciphertext data package to a client, so that the client decrypts the ciphertext data package based on the hash function, the oblivious pseudo-random function, the key derivation function, and the symmetric encryption algorithm which are pre-negotiated with a server    S304

Fig.3

## Apparatus 400 of data querying

Acquisition module 401

Encryption module 402

Determination module 403

Decryption module 404

Fig.4

## Apparatus 500 of data querying

Keyword encryption module 501

Key determination module 502

Key value encryption module 503

Ciphertext generation module 504

Fig.5

## Electronic device 600

602

Memory

Internal memory 6021

601

External memory 6022

Processor

603

Fig.6

## INTERNATIONAL SEARCH REPORT

| International application No. |
| --- |
| **PCT/CN2024/085570** |

### A.    CLASSIFICATION OF SUBJECT MATTER

G06F 16/2455(2019.01)i

According to International Patent Classification (IPC) or to both national classification and IPC

### B.    FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, VEN, CNTXT, USTXT, CNKI, BAIDU: 不经意, 伪随机, 哈希, 密钥, 解密, 加密, 客户端, 密文, 匿踪, oblivious, pseudorandom, hash, key, decryption, encryption, client, ciphertext, PIR

### C.    DOCUMENTS CONSIDERED TO BE RELEVANT

| Category* | Citation of document, with indication, where appropriate, of the relevant passages | Relevant to claim No. |
| --- | --- | --- |
| PX | CN 116361344 A (BEIJING VOLCANO ENGINE TECHNOLOGY CO., LTD.) 30 June 2023 (2023-06-30)<br>claims 1-11 | 1-11 |
| A | CN 115186145 A (HUAKONG TSINGJIAO INFORMATION SCIENCE (BEIJING) CO., LTD.) 14 October 2022 (2022-10-14)<br>description, paragraphs 23-67 | 1-11 |
| A | CN 115408435 A (SHENZHEN QIANHAI WEBANK CO., LTD.) 29 November 2022 (2022-11-29)<br>entire document | 1-11 |
| A | CN 115688167 A (BEIJING WODONG TIANJUN INFORMATION TECHNOLOGY CO., LTD.) 03 February 2023 (2023-02-03)<br>entire document | 1-11 |
| A | KR 20140040930 A (PARK JONG KWAN) 04 April 2014 (2014-04-04)<br>entire document | 1-11 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 June 2024** | **18 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085570**

| Patent document cited in search report | | | Publication date (day/month/year) | Patent family member(s) | | | Publication date (day/month/year) |
|---|---|---|---|---|---|---|---|
| CN | 116361344 | A | 30 June 2023 | None | | | |
| CN | 115186145 | A | 14 October 2022 | None | | | |
| CN | 115408435 | A | 29 November 2022 | None | | | |
| CN | 115688167 | A | 03 February 2023 | WO | 2024077948 | A1 | 18 April 2024 |
| KR | 20140040930 | A | 04 April 2014 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310347782